# EUROPÄISCHE PATENTANMELDUNG

(11) **EP 4 372 255 A1**
(43) Veröffentlichungstag der Anmeldung: **22.05.2024**
(21) Anmeldenummer: 23210086.7
(22) Anmeldetag: 15.11.2023
(51) Int. Cl.: F16K 11/16, F16K 11/22, F16K 27/00, F16K 31/524, F16K 31/60, F16K 7/06

(54) **VERTEILVENTIL**

(30) Priorität: 16.11.2022 DE 102022130363
(71) Anmelder: Otto Bock Mobility Solutions GmbH, 07426 Königsee-Rottenbach (DE)
(72) Erfinder: CASTRUP, Stefan, 07426 Königsee-Rottenbach (DE); MÜLLER, Johann-Christoph, 07426 Königsee-Rottenbach (DE); SCHWAB, Christoph, 07426 Königsee-Rottenbach (DE)
(74) Vertreter: Gramm, Lins & Partner Patent- und Rechtsanwälte PartGmbB

(57) **Zusammenfassung**

Die Erfindung betrifft ein Verteilventil mit mehreren Anschlüssen (4), die mit jeweils einem Anschlusskanal verbunden sind, wobei das Verteilventil mehrere Einzelschaltelemente (8) und wenigstens ein Sammelschaltelement (10) aufweist, die jeweils in eine Durchflussposition und eine Schaltposition bringbar sind, wobei jeder Anschlusskanal durch ein Einzelschaltelement (8) und ein Sammelschaltelement (10) derart beeinflussbar ist, dass der Anschlusskanal geöffnet ist, wenn sich das Einzelschaltelement (8) und das Sammelschaltelement (10) in ihrer Durchflussposition befinden, und wobei der Anschlusskanal geschlossen ist, wenn sich das Einzelschaltelement (8) und das Sammelschaltelement (10) in ihrer Schaltposition befinden, wobei das wenigstens eine Sammelschaltelement (10) und die Einzelschaltelemente (8) unabhängig voneinander betätigbar sind.

## Beschreibung

Die Erfindung betrifft ein Verteilventil mit mehreren Anschlüssen, die durch jeweils einen Anschlusskanalmit dem Zulauf verbunden sind.

Derartige Verteilventile sind aus dem Stand der Technik seit langem bekannt und werden für unterschiedliche Anwendungen verwendet. Je nach Anwendungsfall können sie unterschiedliche Ausgestaltungen annehmen. Ein Anwendungsfall der hier beschriebenen Verteilventile ist die Verwendung bei einer orthopädietechnischen Einrichtung, die beispielsweise über mehrere Kissen verfügt, die mit einem Fluid, beispielsweise Luft, gefüllt werden. Dies betrifft beispielsweise Sitzkissen, Rückenlehnen, Kopfstützen, Abduktionskeile, Seitenpelotten, Armauflagen oder sonstige Kissen, wie sie beispielsweise bei Rollstühlen, Matratzen oder Kissen für orthopädische Betten und Krankenhausbetten verwendet werden. Auch andere Kissen, wie sie beispielsweise in Orthesen angeordnet werden, um eine in der Orthese gelagertes Körperteil zu schützen, kommen in Frage.

Die Anschlüsse können als Zulauf oder Ablauf verwendet werden. Durch einen Zulauf kann ein Fluid in das Verteilventil eindringen. Durch einen Ablauf kann das Fluid das Verteilventil verlassen. Durch eine Umkehr der Strömungsrichtung kann daher aus einem Zulauf ein Ablauf oder aus einem Ablauf ein Zulauf gemacht werden.

Insbesondere für den Fall, dass ein Patient oder Benutzer einer solchen orthopädietechnischen Einrichtung längere Zeit wenigstens ein Körperteil auf einem solchen Kissen ablegt, ist es von Vorteil, unterschiedliche Kammern und/oder unterschiedliche Kissen unterschiedlich stark je nach individuellen Bedürfnissen mit dem Fluid zu befüllen. Insbesondere bei der Verwendung von Matratzen ist es zudem sinnvoll, die Befüllung der einzelnen Kammern oder Kissen zeitlich zu verändern, um beispielsweise zu verhindern, dass der Patient sich wundliegt.

Die Benutzer einer derartigen orthopädietechnischen Einrichtung sind oftmals motorisch eingeschränkt und haben dann oftmals Schwierigkeiten, kleine Betätigungselemente, wie beispielsweise Druckknöpfe oder Hebel, zu verwenden. Dies gilt insbesondere dann, wenn das entsprechende Betätigungselement im angelegten Zustand der orthopädietechnischen Einrichtung nicht oder nur schwer zugänglich ist.

Der Erfindung liegt daher die Aufgabe zugrunde, ein Verteilventil der oben beschriebenen Art so zu verbessern, dass es leicht bedienbar ist und dennoch eine individuelle Befüllung der unterschiedlichen mit ihm verbundenen Kammern oder Kissen erlaubt.

Die Erfindung löst die gestellte Aufgabe durch ein Verteilventil mit mehreren Anschlüssen, die mit jeweils einem Anschlusskanal verbunden sind, wobei das Verteilventil mehrere Einzelschaltelemente und wenigstens ein Sammelschaltelement aufweist, die jeweils in eine Durchflussposition und in eine Schaltposition bringbar sind, wobei jeder Anschlusskanaldurch ein Einzelschaltelement und ein Sammelschaltelement derart beeinflussbar ist, dass der Anschlusskanalgeöffnet ist, wenn sich das Einzelschaltelement und das Sammelschaltelement in ihrer Durchflussposition befinden, und wobei der Anschlusskanalgeschlossen ist, wenn sich das Einzelschaltelement und das Sammelschaltelement in ihrer Schaltposition befinden.

Vorzugsweise, aber nicht notwendigerweise, sind die Einzelschaltelemente und das wenigstens eine Sammelschaltelement unabhängig voneinander betätigbar. Unter dem Betätigen der jeweiligen Elemente wird verstanden, dass sie von der Schaltposition in die Durchflussposition oder umgekehrt gebracht werden. Dies kann in dieser vorteilhaften Ausführungsform unabhängig geschehen. Es ist dann möglich, jedes der Einzelschaltelement aus der Durchflussposition in die Schaltposition und aus der Schaltposition in die Durchflussposition zu bringen, unabhängig davon, ob sich das wenigstens eine Sammelschaltelement in der Durchflussposition oder in der Schaltposition befindet. Ob dadurch ein Anschlusskanal geöffnet oder geschlossen wird oder in seinem jeweiligen Zustand verbleibt, hängt von der Stellung des Sammelschaltelementes und der Ausgestaltung des Verteilventils ab.

Es ist dann ebenso möglich, das wenigstens eine Sammelschaltelement aus der Schaltposition in die Durchflussposition und aus der Durchflussposition in die Schaltposition zu bringen, unabhängig davon, ob sich ein oder mehrere Einzelschaltelemente in der Schaltposition oder in der Durchflussposition befinden. Ob dadurch ein Anschlusskanal geöffnet oder geschlossen wird oder in seinem jeweiligen Zustand verbleibt, hängt von der Stellung des Einzelschaltelementes und der Ausgestaltung des Verteilventils ab.

Ein derartiges Verteilventil kann verwendet werden, um den Inhalt unterschiedlicher Kissen oder Kammern zu beeinflussen und beispielsweise zusätzliches Fluid in die jeweilige Kammer oder das Kissen einzuleiten, aus der Kammer oder dem Kissen abzuleiten oder den Füllstand konstant zu halten.

Ein derartiges Verteilventil verfügt bevorzugt zusätzlich über einen weiteren Anschluss, der entweder nicht mit einem Anschlusskanal verbunden ist oder dessen Anschlusskanal nicht durch ein Einzelschaltelement oder Sammelschaltelement geöffnet oder geschlossen werden kann. Ein solcher Anschluss wird bevorzugt nur als Zulauf benutzt und ist vorzugsweise an eine Fluidquelle, beispielsweise eine Pumpe anschließbar.

Vorzugsweise sind einige, besonders bevorzugt alle Anschlüsse mit einer Verteilkammer verbunden, die Teil des Verteilventils ist. Auf diese Weise ist sichergestellt, dass Fluid, das durch einen als Zulauf genutzten Anschluss in das Verteilventil eintritt, in die Verteilkammer gelangt. Von dort wird es auf die gewünschten Anschlüsse verteilt, die als Ablauf verwendet werden. Vorzugsweise sind die Anschlusskanäle der Anschlüsse mit der Verteilkammer verbunden.

Vorzugsweise ist ein Anschluss des Verteilventils, der als Zulauf genutzt wird, mit einer Fluidquelle, beispielsweise einer Pumpe, verbunden oder zumindest mit einer solchen verbindbar. Die einzelnen Anschlüsse, die als Abläufe verwendet werden, durch die das Fluid, das durch den als Zulauf verwendeten Anschluss in das Ventil eindringt, das Ventil wieder verlässt, sind vorzugsweise mit unterschiedlichen Kammern oder Kissen, die mit dem Fluid gefüllt sind oder gefüllt werden, verbunden oder verbindbar. Auf diese Weise dienen also die jeweiligen Anschlusskanäle vorzugsweise als Verbindung zwischen der Verteilkammer des Verteilventils und dem am Anschluss angeschlossenen Volumen. Selbstverständlich ist das Verteilventil auch in umgekehrter Anordnung verwendbar. Fluid, das durch einen der Anschlüsse in das Ventil eindringt, verlässt es durch einen anderen Anschluss. Voraussetzung ist in beiden Fällen, dass der entsprechende Anschlusskanal geöffnet ist oder die entsprechenden Ablaufkanäle geöffnet sind, der oder die die in Rede stehenden Anschlüsse verbindet.

In einer alternativen Ausführungsform sind die verschiedenen Anschlüsse mit wenigstens einem Volumen verbunden. Die so miteinander verbundenen Volumina sind bevorzugt mit einer vorbestimmten Menge eines Fluides, beispielsweise Luft oder Wasser, gefüllt. Die Gesamtmenge des Fluids, das sich in den verbundenen Volumina befindet, ist in diesem Fall zeitlich konstant. Durch das Verteilventil ist es jedoch möglich, die Verbindung zwischen einzelnen oder allen Volumina zu öffnen und so die Möglichkeit zu eröffnen, Fluid von einem Volumen in ein anderes Volumen zu leiten und auf diese Weise das enthaltenen Fluid umzuverteilen.

Soll jedoch ein Austausch von Fluid durch das Verteilventil verhindert werden, muss es möglich sein, einen, mehrere oder alle Anschlusskanäle zu schließen und so den Füllstand von Kammern oder Kissen, die mit den jeweiligen Anschlüssen verbunden sind, konstant zu halten.

Um dies zu erreichen und zu ermöglichen sind die Anschlusskanäle durch die Einzelschaltelemente und wenigstens ein Sammelschaltelement beeinflussbar. Dies bedeutet insbesondere, dass jeder Anschlusskanalgeöffnet oder geschlossen sein kann, sodass ein Fluidaustausch möglich ist oder unterbunden wird. Dafür stehen unterschiedliche Möglichkeiten zur Verfügung.

Ein Anschlusskanal, vorzugsweise jeder Anschlusskanal, kann beispielsweise geöffnet werden, indem das Sammelschaltelement und das Einzelschaltelement in die Durchflussposition gebracht wird. Im Folgenden wird für unterschiedliche Ausführungsformen der vorliegenden Erfindung beschrieben, ob ein Anschlusskanal geöffnet oder geschlossen ist in Abhängigkeit davon, ob sich das Einzelschaltelement und/oder das Sammelschaltelement in der Durchflussposition oder der Schaltposition befindet. In diesen Fällen bezeichnet "das Einzelschaltelement" das Einzelschaltelement, durch das der jeweils beschriebene Anschlusskanal beeinflussbar ist. "Das Sammelschaltelement" bezeichnet entsprechend das Sammelschaltelement, durch das der Anschlusskanal beeinflussbar ist. Dies steht nicht im Widerspruch dazu, dass das Verteilventil mehrere Einzelschaltelemente aufweist. Ein Einzelschaltelement kann mehrere Anschlusskanäle gleichzeitig beeinflussen, bevorzugt beeinflusst jedes Einzelschaltelement jedoch nur einen einzigen Anschlusskanal. Selbstverständlich ist es auch möglich und in einigen Ausführungsformen vorteilhaft, wenn unterschiedliche Einzelschaltelemente unterschiedliche Anzahlen von Anschlusskanälen beeinflussen. Wichtig ist jedoch, dass jeder Anschlusskanal von höchstens einem Einzelschaltelement, vorzugsweise von genau einem Einzelschaltelement beeinflussbar ist.

Das Verteilventil kann ein einziges Sammelschaltelement aufweisen. In diesem Fall ist das Sammelschaltelement vorzugsweise eingerichtet, alle Anschlusskanäle zu beeinflussen. Alternativ dazu kann das Verteilventil auch mehrere Sammelschaltelemente aufweisen, die jeweils mehrere Anschlusskanäle beeinflussen. Die unterschiedlichen Sammelschaltelemente können gleich viele oder unterschiedlich viele Anschlusskanäle beeinflussen. Besonders bevorzugt ist jedes Sammelschaltelement eingerichtet, Anschlusskanäle zu beeinflussen, die von unterschiedlichen Einzelschaltelementen beeinflusst werden können. Wichtig ist jedoch, dass jeder Anschlusskanal von höchstens einem Sammelschaltelement, vorzugsweise von genau einem Sammelschaltelement beeinflussbar ist.

Erfindungsgemäß ist ein Anschlusskanal zumindest dann geöffnet, wenn sich das Einzelschaltelement und das Sammelschaltelement, also die Schaltelemente, die den jeweiligen Anschlusskanal beeinflussen können, in ihrer Durchflussposition befinden. Erfindungsgemäß ist ein Anschlusskanal zumindest dann geschlossen, wenn sich das Einzelschaltelement und das Sammelschaltelement in ihrer Schaltposition befinden.

Vorzugsweise ist der Anschlusskanal geöffnet, wenn sich das Einzelschaltelement oder das Sammelschaltelement in ihrer Durchflussposition befinden. In dieser Ausführungsform ist es zum Öffnen eines Anschlusskanals nur notwendig, eines der beiden diesen Anschlusskanal beeinflussenden Schaltelemente zu betätigen, also von der jeweiligen Schaltposition in die jeweilige Durchflussposition zu bringen. Die Position des jeweils anderen Schaltelementes ist dann unerheblich. In dieser Ausführungsform wird beispielsweise das Sammelschaltelement in seine Durchflussposition gebracht. Ist dies geschehen, kommt es auf die Position, in der sich die Einzelschaltelemente befinden, bei einem derartigen Verteilventil nicht mehr an. Sofern sich das Sammelschaltelement in der Durchflussposition befindet, ist unabhängig von der Position der Einzelschaltelemente der jeweilige Anschlusskanal geöffnet und ein Fluid kann aus der Verteilkammer durch diesen Anschlusskanal zum damit verbundenen Anschluss oder umgekehrt durch das Verteilventil fließen.

Befindet sich bei dieser Ausführungsform des Verteilventils das Sammelschaltelement jedoch in seiner Schaltposition und nicht in der Durchflussposition ist es dennoch möglich, einen oder mehrere, vorzugsweise alle, Anschlusskanäle zu öffnen. Dazu muss das entsprechende Einzelschaltelement, durch das der zu öffnende Anschlusskanal beeinflussbar ist, in seine Durchflussposition gebracht werden. Auch dies hat einen geöffneten Anschlusskanal zufolge, sodass Fluid durch das Verteilventil hindurchströmen kann. Anders ausgedrückt kann jeder Anschlusskanal durch ein Einzelschaltelement und ein Sammelschaltelement beeinflusst werden und ist nur dann geschlossen, wenn sich sowohl das Einzelschaltelement als auch das Sammelschaltelement in der Schaltposition befinden.

In einer alternativen Ausgestaltung des Verteilventils ist der Anschlusskanal geschlossen, wenn sich das Einzelschaltelement oder das Sammelschaltelement in ihrer Schaltposition befinden. In dieser Ausführungsform ist es zum Schließen eines Anschlusskanals nur notwendig, eines der beiden diesen Anschlusskanal beeinflussenden Schaltelemente zu betätigen, also von der jeweiligen Durchflussposition in die jeweilige Schaltposition zu bringen. Die Position des jeweils anderen Schaltelementes ist dann unerheblich. In dieser Ausführungsform wird beispielsweise das Sammelschaltelement in seine Schaltposition gebracht. Ist dies geschehen, kommt es auf die Position, in der sich die Einzelschaltelemente befinden, bei einem derartigen Verteilventil nicht mehr an. Sofern sich das Sammelschaltelement in der Schaltposition befindet, ist unabhängig von der Position der Einzelschaltelemente der jeweilige Anschlusskanal geschlossen und ein Fluid kann von der Verteilkammer durch diesen Anschlusskanal nicht zum damit verbundenen Anschluss oder umgekehrt durch das Verteilventil fließen.

Befindet sich bei dieser Ausführungsform des Verteilventils das Sammelschaltelement jedoch in seiner Durchflussposition und nicht in der Schaltposition ist es dennoch möglich, einen oder mehrere, vorzugsweise alle, Anschlusskanäle zu schließen. Dazu muss das entsprechende Einzelschaltelement, durch das der zu schließende Anschlusskanal beeinflussbar ist, in seine Schaltposition gebracht werden. Auch dies hat einen geschlossenen Anschlusskanal zufolge, sodass Fluid nicht durch das Verteilventil hindurchströmen kann. Anders ausgedrückt kann jeder Anschlusskanal durch ein Einzelschaltelement und ein Sammelschaltelement beeinflusst werden und ist nur dann geöffnet, wenn sich sowohl das Einzelschaltelement als auch das Sammelschaltelement in der Durchflussposition befinden.

Vorzugsweise wird durch das Sammelschaltelement eine Mehrzahl von Anschlusskanälen beeinflusst. In diesem Fall können alle diese von einem Sammelschaltelement beeinflussbaren Anschlusskanäle gleichzeitig geöffnet werden, indem das Sammelschaltelement in seine Durchflussposition gebracht wird. Die betroffenen Anschlusskanäle, also die Anschlusskanäle, die von dem Sammelschaltelement beeinflussbar sind, sind dann geöffnet und Fluid kann durch diese Anschlusskanäle hindurch fließen, unabhängig davon, in welcher Position sich die Einzelschaltelemente befinden, die die Anschlusskanäle ebenfalls beeinflussen können.

Bevorzugt wird durch ein Einzelschaltelement nur ein Anschlusskanal beeinflusst. So ist es möglich, die mit den jeweiligen Anschlusskanälen verbundenen oder verbindbaren Kammern oder Kissen individuell und unabhängig voneinander zu befüllen oder zu entleeren, indem nur die jeweils benötigten Anschlusskanäle geöffnet oder geschlossen werden.

In einer bevorzugten Ausgestaltung verfügt das Verteilventil über genau ein Sammelschaltelement, wobei durch dieses Sammelschaltelement alle Anschlusskanäle beeinflussbar sind. Dies ist beispielsweise dann sinnvoll, wenn alle mit den Anschlusskanälen verbundenen Kammern oder Kissen gleichzeitig befüllt oder entleert werden sollen, beispielsweise wenn das Fluid vollständig entfernt werden soll oder die Kammern oder Kissen vollständig entleert und erneut befüllt werden sollen.

Vorzugsweise verfügt das Verteilventil über so viele Einzelschaltelemente wie Anschlusskanäle und jeder Anschlusskanal ist durch genau eine Einzelschaltelement beeinflussbar. Alternativ dazu kann das Verteilventil auch wenigstens ein Einzelschaltelement aufweisen, durch das mehrere, beispielsweise zwei, drei oder vier, Anschlusskanäle beeinflussbar sind. Dies ist beispielsweise dann von Vorteil, wenn mehrere Anschlusskanäle mit einem einzigen Kissen oder einer einzigen Kammer verbunden sind oder mehrere Kissen oder Kammern gleichzeitig und nicht unabhängig voneinander befüllt oder entleert werden müssen.

Bevorzugt weisen die Einzelschaltelemente jeweils einen Drücker auf, der wenigstens einen Anschlusskanal zudrückt, wenn der jeweilige Anschlusskanal zumindest auch durch das Einzelschaltelement geschlossen ist. Damit der Drücker den Anschlusskanal vollständig verschließt, ist es notwendig, dass sich auch das Sammelschaltelement in der Schaltposition befindet. Vorzugsweise verlaufen die Anschlusskanäle auf einer Scheibe oder Platte, die als Gegendruckelement für den Drücker dient. Wird das Einzelschaltelement in die Schaltposition gebracht, wird der Drücker in Richtung auf das Gegendruckelement bewegt, wobei zwischen dem Drücker und dem Gegendruckelement der Anschlusskanal verläuft. Dieser wird vom Drücker zugedrückt, sodass kein Fluid mehr hindurchfließen kann. Das Gegendruckelement und/oder der Drücker weist vorzugsweise ein Dichtelement auf, das beispielsweise als elastisches Element und/oder als Rundschnur ausgebildet sein kann.

In einer bevorzugten Ausgestaltung wird der Drücker in einer Richtung senkrecht zur Längserstreckung des Anschlusskanals bewegt, in dem das Einzelschaltelement von der Durchflussposition in die Schaltposition gebracht wird. Dadurch wird der sich zwischen dem Drücker und einem Gegendruckelement, beispielsweise der bereits genannten Scheibe oder Platte, befindende Anschlusskanal zusammengedrückt und geschlossen. Durch die Bewegung des Drückers senkrecht zur Längserstreckung des Anschlusskanals wird möglichst wenig Reibung zwischen dem Drücker und dem Anschlusskanal erzeugt, sodass die mechanische Beanspruchung des Anschlusskanals reduziert und somit die Haltbarkeit des Verteilventils erhöht wird.

Vorzugsweise verfügt jedes Einzelschaltelement über jeweils einen Exzenterhebel, der um eine Schwenkachse verschwenkbar ist, wobei der Drücker bewegbar ist, indem der Exzenterhebel um die Schwenkachse verschwenkt wird. Vorzugsweise verfügt der Hebel an einem Ende über einen Griff oder ein Kontaktelement, an dem er mit der Hand des Benutzers in Kontakt kommt. Am gegenüberliegenden Ende ist vorzugsweise der Drücker angeordnet, der durch die Rotationsbewegung des Exzenterhebels in eine zumindest im Wesentlichen, vorzugsweise jedoch vollständig lineare Bewegung gebracht wird. Diese Bewegung erfolgt besonders bevorzugt in einer Richtung senkrecht zur Längserstreckungsrichtung des Anschlusskanals.

Vorteilhafterweise ist der Drücker in einer Richtung weg von dem Anschlusskanal federbelastet. Dadurch wird erreicht, dass der Drücker sich von dem Anschlusskanal, den er zudrückt, wieder entfernt, sobald sich das Einzelschaltelement nicht mehr in der Schaltposition befindet, sondern beispielsweise in die Durchflussposition gebracht wurde. Im konkreten Ausführungsbeispiel bedeutet dies, dass der Exzenterhebel um die Schwenkachse herum verschwenkt wurde. Dabei erfolgt die Verschwenkung in die umgekehrte Schwenkrichtung, also die Richtung, die der Schwenkrichtung entgegengesetzt ist, in der der Exzenterhebel verschwenkt wurde, um ihn in die Schaltposition zu bringen.

Bevorzugt sind mehrere, vorzugsweise alle, Drücker und/oder mehrere, vorzugsweise alle, Exzenterhebel, von den Anschlusskanälen weg bewegbar, indem das Sammelschaltelement aus der Schaltposition in die Durchflussposition gebracht wird. Dadurch wird verhindert, dass der Drücker den ihm zugeordneten Anschlusskanal zudrücken kann, selbst wenn sich das Einzelschaltelement, beispielsweise der Exzenterhebel, in der Schaltposition befindet.

Vorzugsweise sind mehrere, vorzugsweise alle Einzelschaltelemente in ihre Durchflussposition bringbar, indem das Sammelschaltelement in seine Durchflussposition gebracht wird. Dies ist beispielsweise durch ein Sammelschaltelement möglich, das einen Bügel aufweist, der zum Betätigen des Sammelschaltelementes bewegt wird und dabei die jeweiligen Einzelschaltelemente ebenfalls bewegt.

Vorzugsweise sind die mehreren, vorzugsweise alle Einzelschaltelemente in ihre Schaltposition bringbar, indem das Sammelschaltelement in seine Schaltposition gebracht wird. Auch dies kann durch ein Sammelschaltelement erreicht werden, das einen Bügel aufweist, der zum Betätigen des Sammelschaltelementes bewegt wird und dabei die jeweiligen Einzelschaltelemente ebenfalls bewegt. Vorzugsweise weist das Sammelschaltelement zwei Bügel auf, die in jeweils eine Betätigungsrichtung des Sammelschaltelementes die jeweiligen Einzelschaltelemente bewegen.

Das Sammelschaltelement ist vorzugsweise so ausgebildet, dass beim Betätigen des Sammelschaltelementes einige oder alle Einzelschaltelemente ebenfalls betätigt werden. Wenn das Sammelschaltelement aus der Durchflussposition in die Schaltposition gebracht wird, werden dadurch einige oder alle Einzelschaltelemente betätigt und vorzugsweise ebenfalls aus der Durchflussposition in die Schaltposition gebracht. Wenn das Sammelschaltelement aus der Schaltposition in die Durchflussposition gebracht wird, werden dadurch einige oder alle Einzelschaltelemente betätigt und vorzugsweise ebenfalls aus der Schaltposition in die Durchflussposition gebracht. Um dies zu erreichen kann das Sammelschaltelement einen Bügel aufweisen oder ein Bügel sein.

In einer bevorzugten Ausgestaltung hat eine Betätigung des Sammelschaltelementes keine Betätigung einzelner oder aller Einzelschaltelemente zur Folge. Ein derart ausgebildetes Verteilventil kann vorzugsweise dennoch einen oder zwei Bügel aufweisen, die es ermöglichen, einige oder alle Einzelschaltelemente gemeinsam zu betätigen, indem der Bügel von einer ersten Position in eine zweite Position gebracht wird. Besonders bevorzugt verfügt ein solches Verteilventil über zwei Bügel, von denen ein erster Bügel eingerichtet ist, einige oder alle Einzelschaltelemente aus deren Schaltposition in deren Durchflussposition zu bringen, indem der erste Bügel aus seiner ersten Position in seine zweite Position gebracht wird. Der zweite Bügel ist dann vorzugsweise eingerichtet, einige oder alle Einzelschaltelemente aus deren Durchflussposition in deren Schaltposition zu bringen, indem der zweite Bügel aus seiner ersten Position in seine zweite Position gebracht wird.

Alle diese Ausgestaltungen mit einem oder zwei Bügeln können mit oder ohne zusätzliches separates Sammelschaltelement ausgebildet sein. Ist kein zusätzliches separates Sammelschaltelement vorhanden, wird das erfindungsgemäß benötigte Sammelschaltelement durch den oder die Bügel gebildet.

Besonders bevorzugt ist das Sammelschaltelement ein Schieber. Dies ist ein auf besonders einfache Weise betätigtes Schaltelement, sodass auch Personen, die motorisch eingeschränkt sind, das Sammelschaltelement einfach und sicher betätigen können.

Besonders bevorzugt sind die Anschlusskanäle durch zwei miteinander verbundene Folienlagen ausgebildet. Die beiden Folienlagen werden bei der Herstellung beispielsweise in ein Werkzeug eingelegt, das eine Oberform und eine Unterform aufweist. Vorzugsweise sind die Oberform und die Unterform so ausgebildet, dass sie entlang von Bereichen oder Linien die beiden Folienlagen einklemmen, wenn die Oberform und die Unterform aufeinander zu bewegt werden. Vorzugsweise ist zumindest ein Teil dieser Linien identisch mit wenigstens einer Verbindungslinie, entlang derer die beiden Folienlagen miteinander verbunden werden sollen. Bevor oder während dies geschieht wird jedoch eine Druckdifferenz an wenigstens eine der Folienlagen angelegt. Dies bedeutet, dass auf einer Seite der Folienlage ein anderer Druck, insbesondere Luftdruck, herrscht, als auf der gegenüberliegenden Seite. Dies kann auf unterschiedliche Weisen erreicht werden.

In einer ersten Ausgestaltung wird ein Zwischenraum zwischen einer Folienlage und der Oberform oder der Unterform mit einem Unterdruck beaufschlagt. Dieser Unterdruck sorgt dafür, dass sich die jeweilige Folienlage zumindest abschnittsweise auf die Oberform oder die Unterform zu bewegt. Dadurch trennt sich die eine Folienlage von der anderen Folienlage und es entsteht der Zwischenraum und Abstand zwischen den beiden Folienlagen. Alternativ oder zusätzlich dazu kann auch ein Überdruck zwischen den beiden Folienlagen angelegt werden. Dies kann beispielsweise erreicht werden, indem Luft oder ein anderes Fluid zwischen den beiden Folienlagen eingeleitet wird. Dadurch bewegt sich wenigstens eine der beiden Folienlagen auf die Oberform oder die Unterform zu und beiden Folienlagen trennen sich voneinander. Alternativ oder zusätzlich dazu können auch die Zwischenräume sowohl zwischen der Oberform und der einen Folienlage als auch zwischen der Unterform und der anderen Folienlage mit einem Unterdruck beaufschlagt werden, der ausreichend stark ist, die jeweilige Folie in Richtung auf die Form zu bewegen.

Wie stark der jeweilige Unterdruck und/oder Überdruck gewählt werden kann oder höchstens gewählt werden darf, hängt von verschiedenen Faktoren, wie beispielsweise dem Abstand zwischen zwei benachbarten Verbindungslinien, den Adhäsionskräften zwischen den beiden Folienlagen, deren Dicke, Steifigkeit und Material ab. Die Oberform und/oder die Unterform können aus mehreren Elementen aufgebaut sein.

In diesem Zustand, in dem sich ein Abstand zumindest abschnittsweise zwischen den beiden Folienlagen befindet, werden die beiden Folienlagen entlang der wenigstens einen Verbindungslinie miteinander verbunden. Vorzugsweise ist wenigstens eine Verbindungslinie so ausgebildet, dass der Abstand zwischen den beiden verbundenen Folienlagen auch dann aufrechterhalten bleibt oder zumindest nicht vollständig verschwindet, wenn die beiden miteinander verbundenen Folienlagen dem Werkzeug wieder entnommen werden. Die Verbindungslinien sind nicht auf gerade Linien beschränkt, sondern können jeden Verlauf nehmen, der für die jeweilige Anwendung und den jeweiligen Zweck sinnvoll und von Vorteil ist.

Vorteilhafterweise wird durch wenigstens zwei Verbindungslinien ein Anschlusskanal zwischen den beiden Folienlagen gebildet, durch den Fluid von außerhalb des Kissens in das Innere des fluidgefüllten Volumens gelangen kann und/oder durch den Fluid das fluidgefüllte Volumen verlassen und aus dem Kissen entweichen kann. Die beiden Verbindungslinien, die die Verbindung zu den Seiten hin begrenzen, insbesondere den Anschlusskanal bilden und entlang derer die beiden Folienlagen miteinander verbunden sind, verlaufen dabei vorzugsweise, jedoch nicht notwendig, parallel zueinander. In einer bevorzugten Ausgestaltung ist dabei die Strecke von der einen Verbindungslinie, die den Anschlusskanal auf der einen Seite begrenzt, bis zur anderen Verbindungslinie, die den Anschlusskanal auf der anderen Seite begrenzt, entlang der einen Folienlage länger als entlang der anderen Folienlage. Dadurch wird der Kanal im Querschnitt asymmetrisch und fällt auch dann nicht vollständig zusammen, wenn kein Fluid durch den Anschlusskanal hindurchgeleitet wird, sodass ein Zwischenraum und ein Abstand zwischen den beiden Folienlagen im Innern des Kanals aufrechterhalten bleibt.

Ein so ausgebildetes erstes Bauteil, das die beiden auf diese Weise miteinander verbundenen Folienlagen aufweist, wird mit einem zweiten Bauteil so verbunden, dass ein fluidgefülltes Volumen entsteht. Im einfachsten Fall verfügt das fluidgefüllte Volumen über eine einzige Kammer, die mit dem Fluid, beispielsweise einem Gas, einem Gel oder einer Flüssigkeit gefüllt ist. Auf diese Weise wird ein Kissen hergestellt, das ein integriertes Verteilventil aufweist. Eine komplizierte und fehleranfällige Montage und Herstellung verschiedener Bauteile, die zudem fluiddicht miteinander verbunden werden müssen, entfällt.

Der wenigstens eine Kanal erstreckt sich vorteilhafter Weise von dem fluidgefüllten Volumen bis in den Außenbereich des Kissens, wo er eine Öffnung zur Umgebungsluft aufweist. Mit dem fluidgefüllten Volumen ist er bevorzugt durch eine Öffnung der ersten Folienlage verbunden, die in einer besonders bevorzugten Ausgestaltung zumindest teilweise innerhalb eines durch eine der Verbindungslinien gebildeten unterbrochenen Ringes liegt. Eine Verbindung, insbesondere ein Kanal, der durch wenigstens zwei Verbindungslinien begrenzt wird, kann mit anderen Verbindungen, insbesondere Kanälen verbunden sein. Insbesondere kann es von Vorteil sein, wenigstens eine Kammer zwischen den Folienlagen auszubilden, in die mehrere Kanäle oder Verbindungen einmünden. Führen die Kanäle oder Verbindungen, die in eine solche Kammer einmünden zu unterschiedlichen fluidgefüllten Volumina, kann das Fluid auf diese Volumina besonders leicht verteilt werden. Auch die wenigstens eine Kammer wird vorzugsweise durch Verbindungslinien zwischen den Folienlagen begrenzt.

Jeder Kanal bildet einen Teil des Verteilventils, so dass er geöffnet und geschlossen werden kann. Dadurch kann gesteuert werden, ob der jeweilige Kanal für einen Transfer von Fluid verwendet werden kann. Ist das Ventil geschlossen, kann kein Fluid durch den Kanal passieren.

Vorzugsweise liegen die Folienlagen entlang wenigstens eines Abschnittes des Kanals vollflächig aneinander an. Ein solcher Abschnitt ist beispielsweise wenigstens 0,5 cm, bevorzugt wenigstens 1 cm, besonders bevorzugt wenigstens 1,5 cm lang. Im Sinne der vorliegenden Erfindung liegen die Folienlagen vollflächig aneinander an, wenn sie durch einen auf sie ausgeübten Druck, beispielsweise durch einen Stempel, vollständig geschlossen werden können, so dass dann kein Fluid durch diesen Abschnitt gelangen kann. Dieser Druck wird daher im Folgenden Stempeldruck genannt, auch wenn er zwar vorzugsweise aber nicht zwangsläufig durch einen Stempel erzeugt wird. Es ist von Vorteil, aber nicht notwendig, wenn die Folienlagen in dem Abschnitt auch ohne diesen Stempeldruck vollflächig aneinander anliegen. Vorzugsweise verfügt das Kissen über wenigstens ein Druckelement, durch das ein Stempeldruck auf den Abschnitt des Kanals aufgebracht werden kann, der ausreichend groß ist, den Abschnitt zu schließen und eine Passage des Fluids durch diesen Abschnitt zu unterbinden. Ein solches Druckelement, insbesondere ein Stempel, kann beispielsweise nach dem Verbinden der Folienlagen an den verbundenen Folienlagen angeordnet werden.

In bevorzugten Ausgestaltungen befinden sich zwischen dem ersten Bauteil und dem zweiten Bauteil des Kissens wenigstens zwei fluidgefüllte Volumina. Diese können als Kammern ausgebildet sein. Fluid, das sich in einem der beiden Volumina befindet, kann durch einen Kanal, der zwischen den beiden Folienlagen verläuft und durch wenigstens zwei Verbindungslinien der Folienlagen gebildet wird, von einem der beiden Volumina in das andere der wenigstens zwei Volumina gelangen. Dazu ist es von Vorteil, wenn in jedem der beiden Volumina eine Öffnung des Kanals liegt, die vorzugsweise durch eine Öffnung der ersten Folienlage gebildet wird. Diese liegt bevorzugt zumindest teilweise, vorzugsweise jedoch vollständig, im Innern eines durch eine der Verbindungslinien gebildeten unterbrochenen Ringes liegt. Die Verbindungslinie, die den jeweiligen unterbrochenen Ring bildet, kann dabei die gleiche sein, die den Kanal auf einer Seite begrenzt. Es ist jedoch auch möglich, eine separate Verbindungslinie zwischen den beiden Folienlagen herzustellen, die den unterbrochenen Ring bildet, in dessen zumindest teilweise die Öffnung der ersten Folie liegt. Allgemein ist es von Vorteil, wenn eine Öffnung der ersten Folienlage vollständig im Inneren des unterbrochenen Ringes angeordnet ist. Es ist von Vorteil, wenn zusätzlich zu dem Kanal, der die wenigstens zwei fluidgefüllten Volumina miteinander verbindet, weitere Kanäle zwischen den Folienlagen gebildet werden, in dem die Folienlagen entlang weiterer Verbindungslinien miteinander verbunden werden. Diese weiteren Kanäle sind vorteilhafter Weise so angeordnet, dass sie jeweils eines oder mehrere der fluidgefüllten Volumina mit der Umgebung des Kissens verbinden, sodass Fluid von außerhalb des Kissens in das jeweilige Volumen eingeleitet oder aus ihm entfernt werden kann. Es sind auch Ausgestaltungen ohne unterbrochenen Ring möglich. Bei diesen ist vorzugsweise sichergestellt, dass die Verbindungslinien derart ausgebildet sind, dass die Folienlagen im Bereich der Öffnung der ersten Folienlage nicht vollständig aneinander anliegen, so dass Fluid durch die Öffnung in den Kanal eintreten kann.

Vorzugsweise werden die beiden Folienlagen verbunden, indem sie miteinander verklebt oder verschweißt werden, wobei vorzugsweise wenigstens eine der Folienlagen entlang der wenigstens einen Verbindungslinie erwärmt wird. Dies kann beispielsweise durch das Einstrahlen von Strahlung, beispielsweise elektromagnetischer Strahlung, insbesondere IR-Strahlung oder UV-Strahlung, oder Ultraschall geschehen. In einer bevorzugten Ausgestaltung werden die Folienlagen mittels einer HF-Verschweißung miteinander verbunden. Dazu wird beispielsweise ein hochfrequentes (HF) elektrisches Feld zwischen der Oberform und der Unterform angelegt. Die Frequenz beträgt vorzugsweise wenigstens 10 MHz, bevorzugt wenigstens 20 MHz, besonders bevorzugt wenigstens 27 MHz. Auch können die Teile der Form, insbesondere die Oberform und/oder die Unterform erwärmt werden, sodass in dem Bereich, in dem die Oberform und die Unterform die beiden Folienlagen einklemmen, ausreichend Wärme in das Material der Folienlagen übertragen wird, um dieses Material zu schmelzen oder zumindest zu erweichen. Beim späteren Erstarren oder Aushärten verbindet sich das Material der beiden Folienlagen miteinander und es entstehen die Verbindungslinien.

Mithilfe der beigefügten Abbildungen wird nachfolgend ein Ausführungsbeispiel der vorliegenden Erfindung näher erläutert. Es zeigen:
- Figuren 1-3 -: ein Verteilventil gemäß einem Ausführungsbeispiel der vorliegenden Erfindung in einer schematischen 3D-Ansicht, einer schematischen Schnittdarstellung in einer ersten und in einer zweiten Richtung, wobei sich das Ventil in einem ersten Zustand befindet,
- Figuren 4-6 -: die Darstellungen des Ventils aus den Figuren 1 bis 3, wobei sich das Ventil in einem zweiten Zustand befindet,
- Figuren 7-9 -: die Darstellungen des Ventils aus den Figuren 1 bis 3, wobei sich das Ventil in einem dritten Zustand befindet und
- Figuren 10 und 11: die schematischen Darstellungen von Anschlusskanälen und Verteilerkammer.

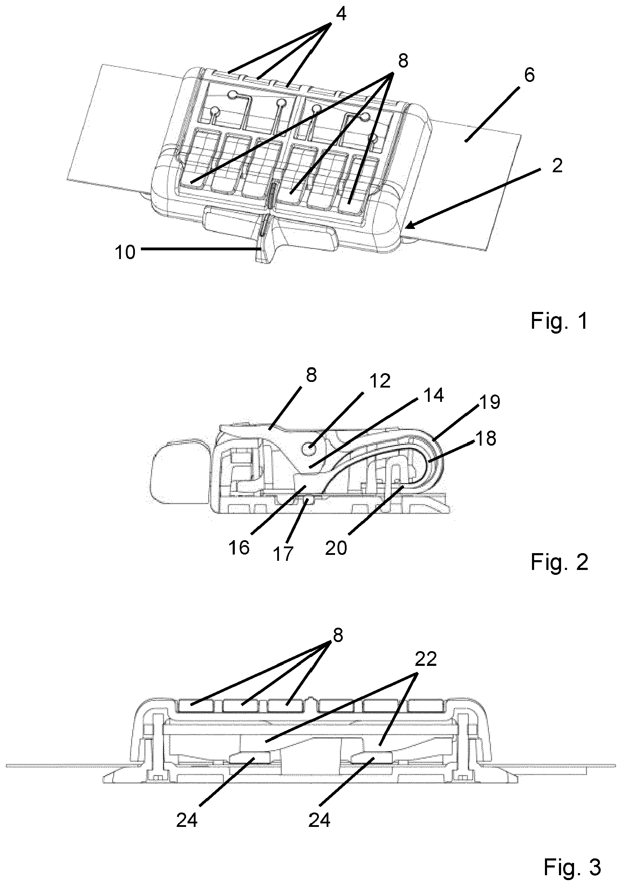

Figur 1 zeigt eine schematische Ansicht eines Verteilventils gemäß einem ersten Ausführungsbeispiel der vorliegenden Erfindung. Es verfügt über einen Anschluss ohne verschließbaren Anschlusskanal 2 und sechs Anschlusskanäle, deren Anschlüsse 4 dargestellt sind. Die Anschlüsse 4 der Anschlusskanäle sind mit dem Anschluss ohne verschließbaren Anschlusskanal 2 verbunden. Die Anschlusskanäle sind nicht dargestellt. Sie sind in einer Folie 6 ausgebildet, die zwei aneinander befestigte Folienlagen aufweist, zwischen denen sich die verschiedenen Kanäle und auch die Anschlusskanäle befinden. Im gezeigten Ausführungsbeispiel weist das Verteilventil sechs Einzelschaltelemente 8 und ein Sammelschaltelement 10 auf. Aus Gründen der Übersichtlichkeit sind nur jeweils drei der Anschlüsse 4 und der Einzelschaltelemente 8 mit einem Bezugszeichen versehen.

Die Einzelschaltelemente 8 sind als Exzenterhebel ausgebildet und so angeordnet, dass jedes Einzelschaltelement 8 genau einen Anschlusskanal beeinflussen kann. Dieser liegt im gezeigten Ausführungsbeispiel unterhalb des jeweiligen Einzelschaltelementes 8. Jeder Anschlusskanal kann im gezeigten Ausführungsbeispiel von genau einem Einzelschaltelement 8 beeinflusst werden. Die Einzelschaltelemente 8 befinden sich in Figur 1 alle in der Schaltposition. Das Sammelschaltelement 10 ist als Schieber ausgebildet. Im gezeigten Ausführungsbeispiel ist es eingerichtet, alle Anschlusskanäle zu beeinflussen. Das Sammelschaltelement 10 befindet sich in Figur 1 in der Schaltposition.

Figur 2 zeigt das Verteilventil aus Figur 1 in einer Schnittdarstellung. Man erkennt ein Einzelschaltelement 8, das als Exzenterhebel ausgebildet ist und um eine Schwenkachse 12 schwenkbar ausgebildet ist. Das Einzelschaltelement 8 weist einen bezüglich der Schwenkachse 12 exzentrischen Exzentervorsprung 14 auf, der im gezeigten Ausführungsbeispiel auf einen Drücker 16 einer Feder 18 drückt. Die Feder 18 ist vorzugsweise aus einem elastischen Material, beispielsweise einem Kunststoff hergestellt. Die Feder 18 ist im gezeigten Ausführungsbeispiel mit einem Befestigungsende 20, das dem Drücker 16 gegenüber liegt, an einer Grundplatte festgelegt. Der gebogene Anteil der Feder 18, der sich zwischen dem Drücker 16 und dem Befestigungsende 20 erstreckt, wirkt daher als Feder, die eine Kraft auf den Drücker 16 aufbringt. In Figur 2 wirkt diese Kraft nach oben, also weg von dem Anschlusskanal, den das Einzelschaltelement 8 beeinflussen kann. Im gezeigten Ausführungsbeispiel ist das Einzelschaltelement 8 in seiner Schaltposition dargestellt, in der der Exzentervorsprung 14 den Drücker 16 der Feder 18 auf den nicht dargestellten Anschlusskanal drückt und diesen so schließt. Dabei drückt der Drücker 16 im gezeigten Ausführungsbeispiel auf ein Gegendruckelement, das vorliegend als Rundschnur 17 ausgebildet ist.

Das Verteilventil verfügt über einen Grundkörper, der einen hinteren Teil 19 aufweist. Dieser hintere Teil 19 ist im gezeigten Ausführungsbeispiel gebogen ausgebildet und wirkt als Feder.

Figur 3 zeigt eine Schnittdarstellung durch das Verteilventil aus den Figuren 1 und 2 in einer anderen Schnittrichtung. Das Sammelschaltelement 10 verfügt über zwei Rampen 22, die mit zwei Vorsprüngen 24 zusammenwirken. Die Rampen 22 sind dabei Teil des Sammelschaltelementes 10 und die beiden Vorsprünge 24 sind Teil des Grundkörpers, an dem die Einzelschaltelemente 8 befestigt sind. Dies ist in der gezeigten Ausführungsform der Fall, jedoch nicht notwendig. Da sich das Sammelschaltelement 10 in seiner Schaltposition befindet, werden die Vorsprünge 24 von den Rampen nach unten, also auf die Anschlusskanäle zu, gedrückt. So wird im gezeigten Ausführungsbeispiel erreicht, dass der Drücker 16 der Feder 18, auf die der Exzentervorsprung 14 des Einzelschaltelementes 8 drückt, den jeweiligen Anschlusskanal verschließen. Der als Feder wirkende hintere Teil 19 des Grundkörpers ist in Figur 3 nicht dargestellt, übt jedoch eine Kraft auf die beiden Vorsprünge 24 aus, die auch auf die Einzelschaltelemente 8 übertragen wird. Diese Kraft wirkt im gezeigten Ausführungsbeispiel nach oben.

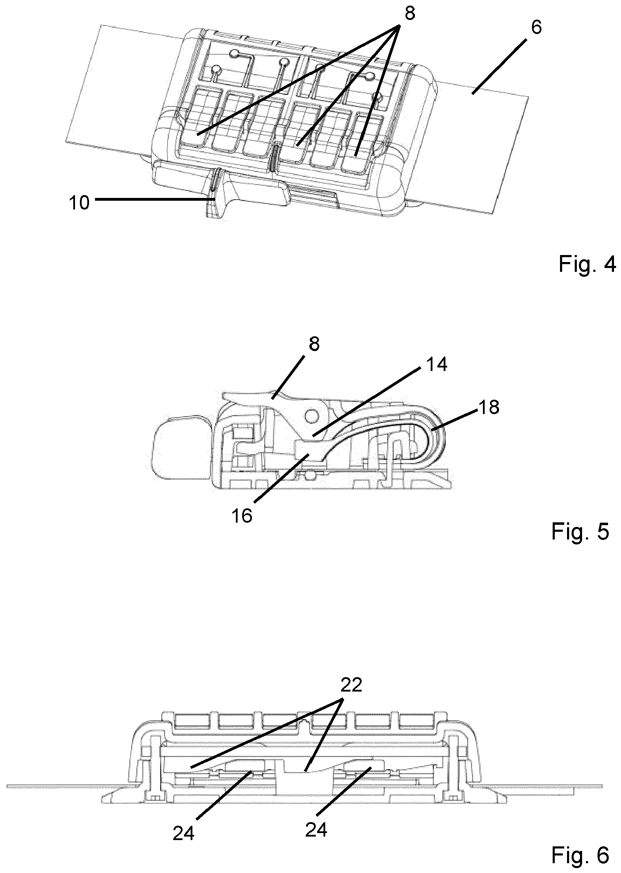

Die Figuren 4 bis 6 entsprechen den Darstellungen der Figuren 1 bis 3, wobei sich in den Figuren 4 bis 6 das Sammelschaltelement 10 in der Durchflussposition befindet. Die Einzelschaltelemente 8 sind weiterhin in ihrer Schaltposition. Man erkennt in Figur 4, dass das Sammelschaltelement 10 im Vergleich zu Figur 1 nach links verschoben und auf diese Weise in die Durchflussposition gebracht wurde.

Aus Figur 6 wir deutlich, welche Auswirkungen das hat. Die Rampen 22 des Sammelschaltelementes 10 werden ebenfalls nach links verschoben und sind nicht mehr im direkten Kontakt mit den Vorsprüngen 24. Da diese Teil des Grundkörpers sind, an dem die Einzelschaltelemente 8 angeordnet sind und der der durch die Federn 18 ausgeübten Kraft ausgesetzt ist, bewegen sich die Vorsprünge 24 von der in Figur 3 gezeigten Position in die in Figur 6 gezeigte Position, wenn das Sammelschaltelement 10 aus der in den Figuren 1 bis 3 gezeigten Schaltposition in die Durchflussposition gebracht wird, die in den Figuren 4 bis 6 dargestellt ist. Zusätzlich übt im gezeigten Ausführungsbeispiel auch der als Feder wirkende hintere Teil 19 des Grundkörpers eine Kraft aus, die die Einzelschaltelemente 8 und die Vorsprünge 24 bewegt.

Durch diese Bewegung wird der Grundkörper, an dem sich die Einzelschaltelemente 8 befinden und damit auch die Einzelschaltelemente 8 nach oben, also weg von den Anschlusskanälen bewegt. Dies ist in Figur 5 zu erkennen. Obwohl sich das in Figur 5 gezeigte Einzelschaltelement 8 noch in seiner Schaltposition befindet, ist der Anschlusskanal geöffnet. Durch die Bewegung des Einzelschaltelementes 8 wird auch der Exzentervorsprung 14 und damit der Drücker 16 der Feder 18 nach oben bewegt, so dass in dem gezeigten Ausführungsbeispiel der Anschlusskanal geöffnet ist.

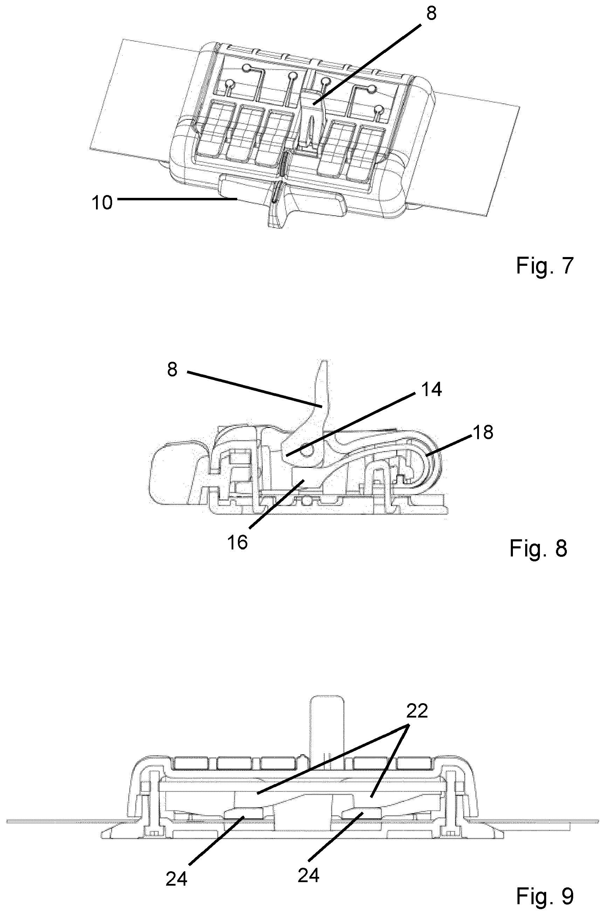

Die Figuren 7 bis 9 zeigen die Darstellungen der Figuren 1 bis 3, wobei eines der Einzelschaltelemente 8 aus der Schaltposition in die Durchflussposition gebracht wurde. Das Sammelschaltelement 10 ist in der Schaltposition. Dies ist besonders in Figur 7 gut zu erkennen.

Figur 8 zeigt, welche Auswirkungen diese Bewegung des Einzelschaltelementes 8 hat. Das Einzelschaltelement 8 wird um die Schwenkachse 12 verschwenkt. Dadurch wird auch der Exzentervorsprung 14 um die Schwenkachse 12 geschwenkt, so dass er nicht mehr in Kontakt mit dem Drücker 16 der Feder 18 ist. Aufgrund der durch die Feder 18 erzeugten Kraft hat sich der Drücker 16 nach oben bewegt. Er hat sich also von dem Anschlusskanal entfernt und ist nun nicht mehr in der Lage, den Anschlusskanal zu schließen.

Daran ändert im dargestellten Ausführungsbeispiel auch die Position des Sammelschaltelementes 10 nichts. Man erkennt in Figur 9, dass die Rampen 22 wie in Figur 3 mit den Vorsprüngen 24 zusammenwirken und den Grundkörper in einer Position nahe der Anschlusskanäle halten. Dennoch ist im gezeigten Ausführungsbeispiel der Anschlusskanal geöffnet.

In dem in den Figuren gezeigten Ausführungsbeispiel ist ein Anschlusskanal also immer dann geöffnet, wenn sich zumindest eines der diesen Anschlusskanal beeinflussenden Schaltelemente, also das jeweilige Einzelschaltelement 8 oder das Sammelschaltelement 10 in ihrer jeweiligen Durchflussposition befinden. Befinden sich beide Schaltelemente in ihrer Schaltposition ist der Anschlusskanal geschlossen, befinden sich beide Schaltelemente in ihrer Durchflussposition, ist der Anschlusskanal geöffnet.

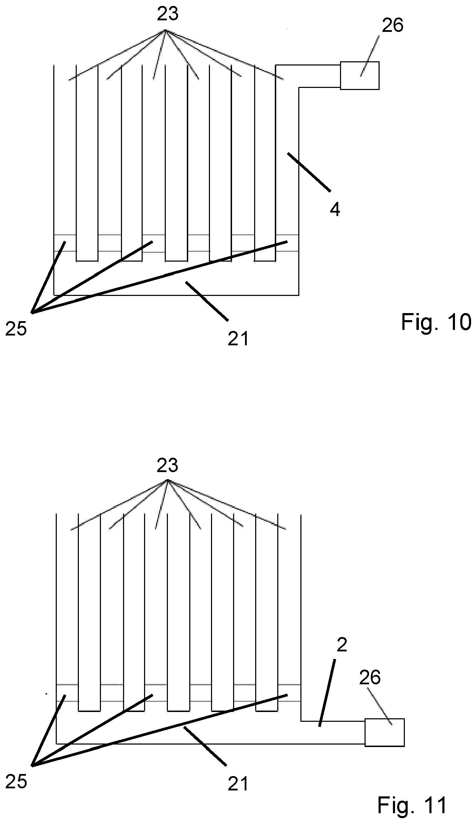

Die Figuren 10 und 11 zeigen schematisch ein Verteilventil mit einem Zulauf, an dem eine Schnittstelle 26 angeordnet ist. Über diese Schnittstelle kann ein Anschlusskanal oder eine andere Fluidleitung, beispielsweise ein Schlauch oder ein Ventil, angeschlossen werden, so dass Fluid durch die Schnittstelle 26 in das Verteilventil gelangen kann. Vorzugsweise wird dazu direkt oder über eine Fluidleitung eine Fluidquelle, beispielsweise eine Pumpe angeschlossen. Alternativ dazu kann an die Schnittstelle 26 auch ein Kissen oder eine Kammer oder ein anderes Fluidreservoir gekoppelt werden. Durch die Schnittstelle 26 kann folglich Fluid, bevorzugt Luft, von außen in das Verteilventil eingeleitet werden. Die Schnittstelle ist vorzugsweise durch ein Verschlusselement, beispielsweise ein Ventil, einen Stopfen oder einen Pfropfen verschließbar.

In Figur 10 ist die Schnittstelle am Ende eines Anschlusses 4 angeordnet, dessen Anschlusskanal 23 über einen Schaltbereich 25 verfügt. Dies ist in Figur 11 anders.

Die Schnittstelle 26 ist in der in Figur 11 gezeigten Ausführungsform am Ende eines Anschlusses ohne verschließbaren Anschlusskanal 2 angeordnet, der entsprechend keinen Schaltbereich 25 aufweist. Bei den ohne Schnittstelle dargestellten Anschlusskanälen 23 bildet das in den Figuren 10 und 11 obere Ende den jeweiligen Anschluss 4.

### Bezugszeichenliste

- 2: Anschluss ohne verschließbaren Anschlusskanal
- 4: Anschluss
- 6: Folie
- 8: Einzelschaltelement
- 10: Sammelschaltelement
- 12: Schwenkachse
- 14: Exzentervorsprung
- 16: Drücker
- 17: Rundschnur
- 18: Feder
- 19: hinterer Teil
- 20: Befestigungsende
- 21: Verteilkammer
- 22: Rampe
- 23: Anschlusskanal
- 24: Vorsprung
- 25: Schaltbereich
- 26: Schnittstelle

## Patentansprüche

1. Verteilventil mit mehreren Anschlüssen (4), die mit jeweils einem Anschlusskanal verbunden sind, wobei das Verteilventil mehrere Einzelschaltelemente (8) und wenigstens ein Sammelschaltelement (10) aufweist, die jeweils in eine Durchflussposition und eine Schaltposition bringbar sind, wobei jeder Anschlusskanal durch ein Einzelschaltelement (8) und ein Sammelschaltelement (10) derart beeinflussbar ist, dass der Anschlusskanal geöffnet ist, wenn sich das Einzelschaltelement (8) und das Sammelschaltelement (10) in ihrer Durchflussposition befinden, und wobei der Anschlusskanal geschlossen ist, wenn sich das Einzelschaltelement (8) und das Sammelschaltelement (10) in ihrer Schaltposition befinden, wobei das wenigstens eine Sammelschaltelement (10) und die Einzelschaltelemente (8) unabhängig voneinander betätigbar sind.

2. Verteilventil nach Anspruch 1, **dadurch gekennzeichnet, dass** der Anschlusskanal geöffnet ist, wenn sich das Einzelschaltelement (8) oder das Sammelschaltelement (10) in ihrer Durchflussposition befinden.

3. Verteilventil nach Anspruch 1, **dadurch gekennzeichnet, dass** der Anschlusskanal geschlossen ist, wenn sich das Einzelschaltelement (8) oder das Sammelschaltelement (10) in ihrer Schaltposition befinden.

4. Verteilventil nach einem der vorstehenden Ansprüche, **dadurch gekennzeichnet, dass** das Verteilventil genau ein Sammelschaltelement (10) aufweist, wobei durch das Sammelschaltelement (10) alle Anschlusskanäle beeinflussbar sind.

5. Verteilventil nach einem der vorstehenden Ansprüche, **dadurch gekennzeichnet, dass** das Verteilventil so viele Einzelschaltelemente (8) wie Anschlusskanäle aufweist und jeder Anschlusskanal durch genau ein Einzelschaltelement (8) beeinflussbar ist.

6. Verteilventil nach einem der vorstehenden Ansprüche, **dadurch gekennzeichnet, dass** die Einzelschaltelemente (8) jeweils einen Drücker (16) aufweisen, der wenigstens einen Anschlusskanal zudrückt, wenn der jeweilige Anschlusskanal zumindest auch durch das Einzelschaltelement (8) geschlossen ist.

7. Verteilventil nach Anspruch 6, **dadurch gekennzeichnet, dass** der Drücker (16) in einer Richtung senkrecht zur Längserstreckung des Anschlusskanals bewegt wird, indem das Einzelschaltelement (8) von der Durchflussposition in die Schaltposition gebracht wird.

8. Verteilventil nach Anspruch 7, **dadurch gekennzeichnet, dass** die Einzelschaltelemente (8) jeweils einen Exzenterhebel aufweisen, der um eine Schwenkachse (12) verschwenkbar ist, wobei der Drücker (16) bewegbar ist, indem der Exzenterhebel um die Schwenkachse (12) verschwenkt wird.

9. Verteilventil nach einem der Ansprüche 6 bis 8, **dadurch gekennzeichnet, dass** die Drücker (16) in einer Richtung weg von dem Anschlusskanal federbelastet ist.

10. Verteilventil nach einem der Ansprüche 6 bis 9, **dadurch gekennzeichnet, dass** mehrere, vorzugsweise alle, Drücker (16) und/oder mehrere, vorzugsweise alle, Exzenterhebel, von den Anschlusskanälen weg bewegbar sind, indem das Sammelschaltelement (10) aus der Schaltposition in die Durchflussposition gebracht wird.

11. Verteilventil nach einem der vorstehenden Ansprüche, **dadurch gekennzeichnet, dass** mehrere, vorzugsweise alle Einzelschaltelemente (8) in ihre Durchflussposition bringbar sind, indem das Sammelschaltelement (10) in seine Durchflussposition gebracht wird.

12. Verteilventil nach einem der vorstehenden Ansprüche, **dadurch gekennzeichnet, dass** die mehreren, vorzugsweise alle Einzelschaltelemente (8) in ihre Schaltposition bringbar sind, indem das Sammelschaltelement (10) in seine Schaltposition gebracht wird.

13. Verteilventil nach einem der vorstehenden Ansprüchen, **dadurch gekennzeichnet, dass** wenigstens ein Sammelschaltelement (10) ein Schieber ist.

14. Verteilventil nach einem der vorstehenden Ansprüche, **dadurch gekennzeichnet, dass** die Anschlusskanäle durch zwei mit einander verbundene Folienlagen gebildet sind.
